Europäisches Patentamt

European Patent Office

Office européen des brevets

(19)

(11) Veröffentlichungsnummer : **0 093 795**
**B1**

(12) **EUROPÄISCHE PATENTSCHRIFT**

(45) Veröffentlichungstag der Patentschrift :
05.06.85

(21) Anmeldenummer : 82106732.9

(22) Anmeldetag : 26.07.82

(51) Int. Cl.⁴ : **B 60 D   1/06**

(54) Anhängevorrichtung für Kraftfahrzeuge.

(30) Priorität : 06.05.82 DE 3216921

(43) Veröffentlichungstag der Anmeldung :
16.11.83 Patentblatt 83/46

(45) Bekanntmachung des Hinweises auf die Patenterteilung : 05.06.85 Patentblatt 85/23

(84) Benannte Vertragsstaaten :
BE FR NL SE

(56) Entgegenhaltungen :
EP-A- 0 047 961
DE-A- 1 630 928
DE-A- 2 822 662
FR-A- 2 390 304

(73) Patentinhaber : Westfalia-Werke Franz Knöbel &
Söhne KG
Am Sandberg 45
D-4840 Rheda-Wiedenbrück (DE)

(72) Erfinder : Hermbusch, Gerd, Ing. grad.
Westfalen Strasse 24
D-4831 Langenberg (DE)

(74) Vertreter : Meldau, Gustav, Dipl.-Ing. et al
Vennstrasse 9
D-4830 Gütersloh 1 (DE)

## Beschreibung

Die Erfindung liegt auf dem Gebiet der Anhängevorrichtungen für Fahrzeuge und betrifft insbesondere eine verdeckt an Kraftfahrzeugen anzubringende, abnehmbare Kugelkopfkupplung mit einer Aufnahmehülse, die etwa senkrecht hinter der Stoßstange o. dgl. angeordnet ist, mit einem nach oben abgewinkelten Befestigungshals, der in die Aufnahmehülse einschiebbar und dort mit Sperrelementen festlegbar ist, die in etwa radiale und axiale Bohrungen eingreifen (EP-A-0 047 961).

Es sind eine ganze Anzahl von gattungsgemäßen Anhängevorrichtungen bekannt, bei denen die eigentliche Anhängekupplung bzw. der eigentliche, am Zugfahrzeug anzubringende Anhängehaken nur dann am Fahrzeug angebracht wird, wenn ein Anhänger gezogen werden soll. Das hat den Vorteil, daß bei der Benutzung des Fahrzeuges ohne Anhänger nicht nur die Anhängevorrichtung nicht zu sehen ist, sondern auch die über das Fahrzeugprofil nach hinten hinausragende Anhängevorrichtung die Gesamtfahrzeuglänge nicht vergrößert und dadurch gegebene Unfallgefahren vermieden werden. Um diese abnehmbaren, im wesentlichen hakenförmigen Anhängevorrichtungen in ihrer am Fahrzeug fest angebrachten Aufnahme zu halten, werden aus Sicherheitsgründen im allgemeinen mindestens zwei, im wesentlichen unabhängig voneinander funktionierende Sperr- oder Klemmelemente verwendet. Es ist nun erforderlich, diese Sperr- oder Klemmelemente o. dgl. ihrerseits wieder dagegen zu sichern, daß sie durch die Beanspruchung im Fahrbetrieb mit Anhänger oder auch unbefugt entsperrt werden können. Dazu sind schon eine Reihe von Sicherungen vorgeschlagen worden, die jedoch jeweils nur immer ein einzelnes Sperrelement sichern und auch betätigt werden bzw. abgenommen werden können, solange noch an den Haken ein Anhänger angekuppelt ist.

Die Erfindung hat sich die Aufgabe gestellt, eine Sicherung zu schaffen, die mehrere Sperr- und Klemmelemente gleichzeitig gegen Entfernung sichert und nur dann in die Entsicherungsstellung zu bewegen ist, wenn der Haken frei ist, d. h. wenn auf dem Haken kein Anhänger angekuppelt ist. Andererseits soll diese Sicherung nach der Erfindung nur dann in ihre Sicherungsstellung zu bewegen sein, wenn die Klemm- und Sperrelemente zum Halten des Hakens in seine Aufnahme am Zugfahrzeug richtig eingesetzt sind.

Zur Lösung dieser Aufgabe ist nach der Erfindung eine gattungsgemäße Anhängevorrichtung gekennzeichnet durch einen U-förmigen Schwenkbügel, dessen Schenkel sich parallel zum Haltearm erstrecken und der am Befestigungshals zwischen einer Stellung verschwenkbar gelagert ist, in der die gebogene Basis zwischen den beiden Schenkeln die Kupplungskugel teilweise abdeckt und die Schenkel die Sperrelemente freigeben und einer Stellung, in der die gebogene Basis die Kupplungskugel freigibt und die Schenkel die Sperrelemente abdecken. Vorzugsweise ist der Schwenkbügel mit einer winkligen Abbiegung ausgebildet, etwa parallel zum Haltearm und Befestigungshals und der dazwischen liegenden Abwinklung verlaufend gebogen. Nach einer vorteilhaften Ausführungsform ist die Vorrichtung dadurch gekennzeichnet, daß bei Anordnung eines Steck- oder Drehbolzens als Halte- und/oder Sperrelement, etwa im Bereich der Abwinklung zwischen Haltearm und Befestigungshals, der Schwenkbügel in diesem Bereich mindestens an einem seiner Schenkel mit einer, den Steck- oder Drehbolzen im Abstand überdeckenden Auswinkelung versehen ist. Nach einer vorteilhaften Weiterbildung ist der zum Schwenkpunkt hin abgewinkelte Teil des U-förmigen Schwenkbügels so lang ausgebildet, daß der Schwenkbügel in abgeschwenkter Stellung parallel zu dem Haltearm diesen nach unten überragt und damit auch einen weiteren Schwankhebel sichert, der zum Festlegen des Befestigungshalses der Kupplung in der Hülse aus einer 90°-Stellung in eine Stellung unmittelbar unterhalb des Haltearms und parallel dazu verschwenkbar ist.

Die Sicherung bei der Anhängevorrichtung nach der Erfindung hat den Vorteil, daß sie bei einfacher, leichter und sinngemäßer Betätigung fest und unverlierbar mit der Anhängevorrichtung verbunden ist und sämtliche Sperr- und Halteelemente für die abnehmbare Anhängerkupplung sogleich sichert. Darüberhinaus ist sie bei angekuppeltem Anhänger nicht zu betätigen und in die entsicherte Stellung zu bringen bzw. solange sie in entsicherter Stellung steht, ist ein Ankuppeln eines Anhängers nicht durchzuführen. Nach einer Weiterbildung läßt sich diese Sicherung auch derart ausbilden, daß sie eine zusätzliche Sperrfunktion übernimmt.

Die Erfindung wird nachstehend anhand eines Ausführungsbeispiels mit Bezug auf die Zeichnung näher erläutert. In den Zeichnungen zeigen:

Figur 1 eine perspektivische Ansicht der Anhängerkupplung,

Figur 2 eine Seitenansicht im gesicherten Zustand,

Figur 3 eine Seitenansicht entsprechend der Figur 2 in entsichertem Zustand,

Figur 4 eine Draufsicht im gesicherten Zustand entsprechend der Fig. 2,

Figur 5 eine teilweise Draufsicht im entsicherten Zustand entsprechend der Fig. 3,

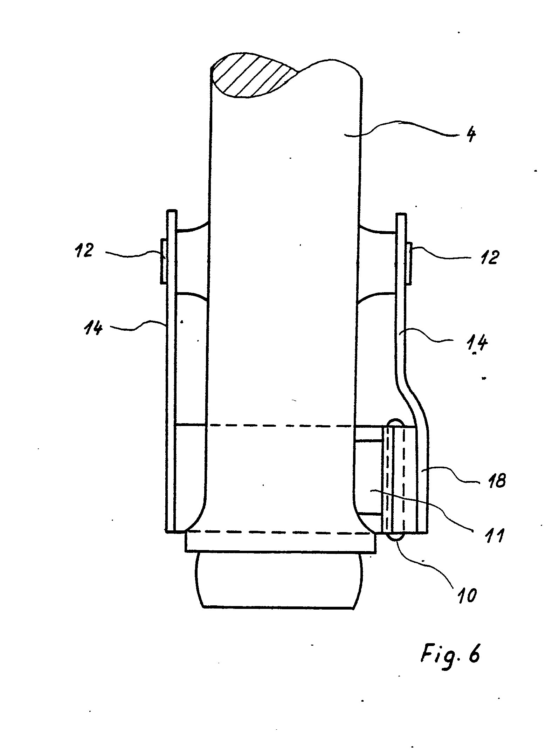

Figur 6 eine Rückansicht.

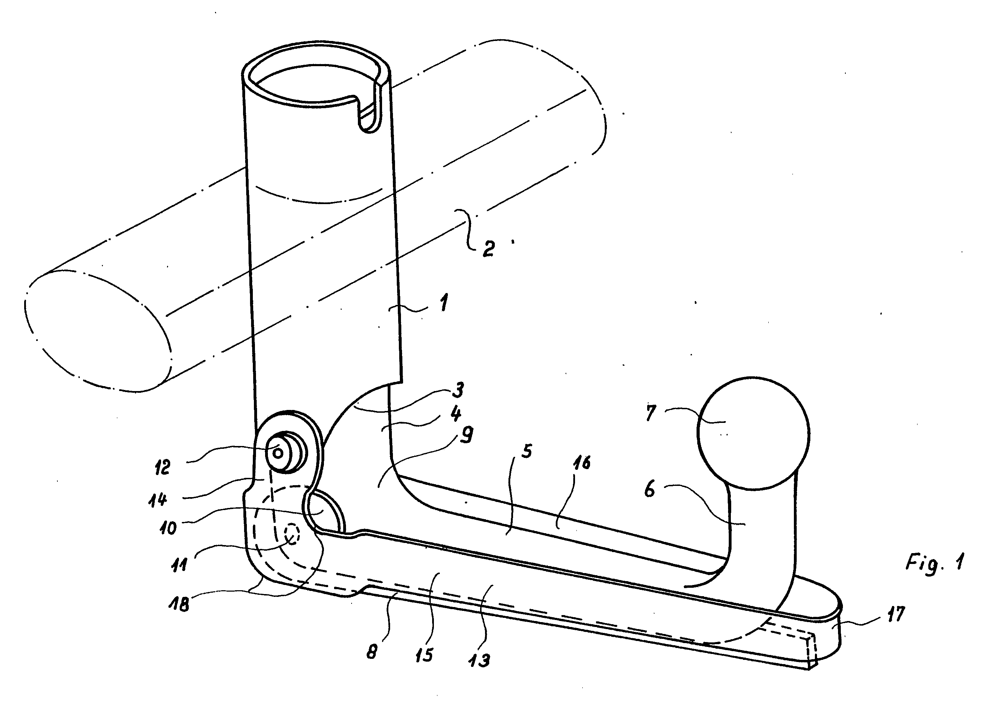

Eine Aufnahmehülse 1 ist, senkrecht stehend, fest mit einem in Fig. 1 gestrichelt angedeuteten Teil 2 am hinteren Ende des Kraftfahrzeuges verbunden. Bei dem Teil 2 kann es sich um eine Quertraverse handeln. Die Hülse 1 ist rohrförmig ausgebildet und an ihrem unteren Ende mit einem schrägen Abschnitt 3 versehen. Der tiefere Teil dieses schrägen Abschnittes 3 liegt in Fahrtrichtung nach vorne. In Querrichtung ist der Durchmesser der Hülse an dem Schrägabschnitt 3 mit zwei Ausnehmungen versehen zur Aufnahme einer Schwenkachse, die später beschrieben wird.

In die Hülse 1 ist der Befestigungshals 4 der einsetzbaren Kugelkopfkupplung von unten her eingeschoben. An diesen Befestigungshals 4 schließt sich, nach einer etwa rechtwinkligen Abbiegung, der Haltearm 5 an, an dessen hinterem Ende, auf einer wiederum etwa rechtwinkligen, nach oben gerichteten Abbiegung 6, der eigentliche Kupplungshals anschließt mit der darauf sitzenden Kupplungskugel 7.

Die hier beispielhaft dargestellte Anhängevorrichtung ist mit einer Sperr- und Haltevorrichtung versehen, die aus einer zentrisch in dem Befestigungshals 4 angeordneten Stange besteht, die am oberen Ende des Befestigungshalses Sperrelemente betätigt, die mit der Hülse 1 zusammenwirken und am unteren Ende mit einem Schwenkhebel 8 versehen ist, der in waagerechter Ebene um etwa 90° verschwenkbar, die im Inneren des Befestigungshalses 4 angeordnete Stange aus der Sperrstellung in die Öffnungsstellung verdreht. Die Sperrstellung ist dabei diejenige Stellung, in der der Schwenkhebel 8 parallel unterhalb des Haltearmes 5 liegt.

Ein weiteres Sperrelement kann beispielsweise in der rechtwinkligen Abbiegung 9 zwischen dem Befestigungshals 4 und dem Haltearm 5 angeordnet sein. Der Betätigungskpf 10 dieses Sperrelementes liegt unmittelbar auf der Seite der Biegung 9, und das Sperrelement durchdringt mit einem Schaft 11 diese Abbiegung.

An dem Befestigungshals 4 ist, in eingesetztem Zustand, in die in Fig. 1 nicht sichtbaren Ausschnitte des Schrägabschnitts 3 eingreifend, eine Querachse angeordnet, deren nach beiden Seiten austretende Enden 12 als Schwenklager für einen U-förmigen Schwenkbügel 13 dienen. Die Querachse 12 kann aus zwei, den Befestigungshals nicht durchdringenden Halbachsen bestehen, so daß die zentrische Bohrung, in der die Betätigungsstange für das Sperrelement angeordnet ist, nicht gestört wird, sie kann auch derart durchgehend ausgebildet sein, daß sie, die Bohrung dieser Betätigungsstange berührend, außerhalb des Querschnittradius des Befestigunshalses liegt. Die Querachse kann dann mit einem Nocken o. dgl. versehen sein, der in Sperrestellung in eine Ausnehmung in der senkrecht im Befestigungshals angeordneten Betätigunsstange des Sperrelementes eingreift und damit eine zusätzliche Sicherung bildet.

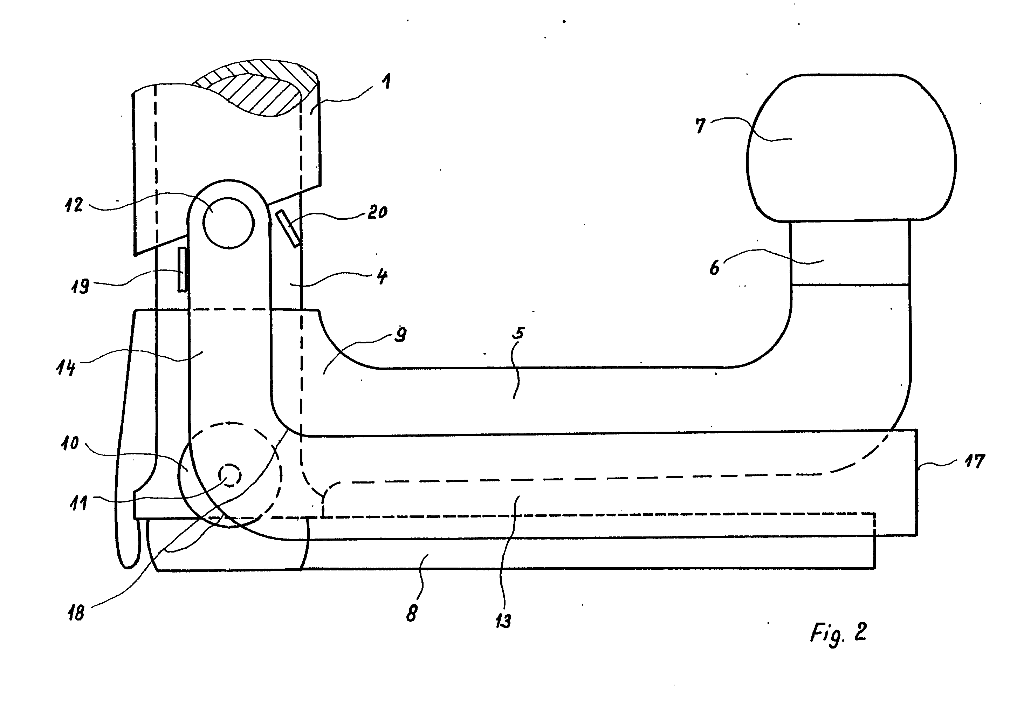

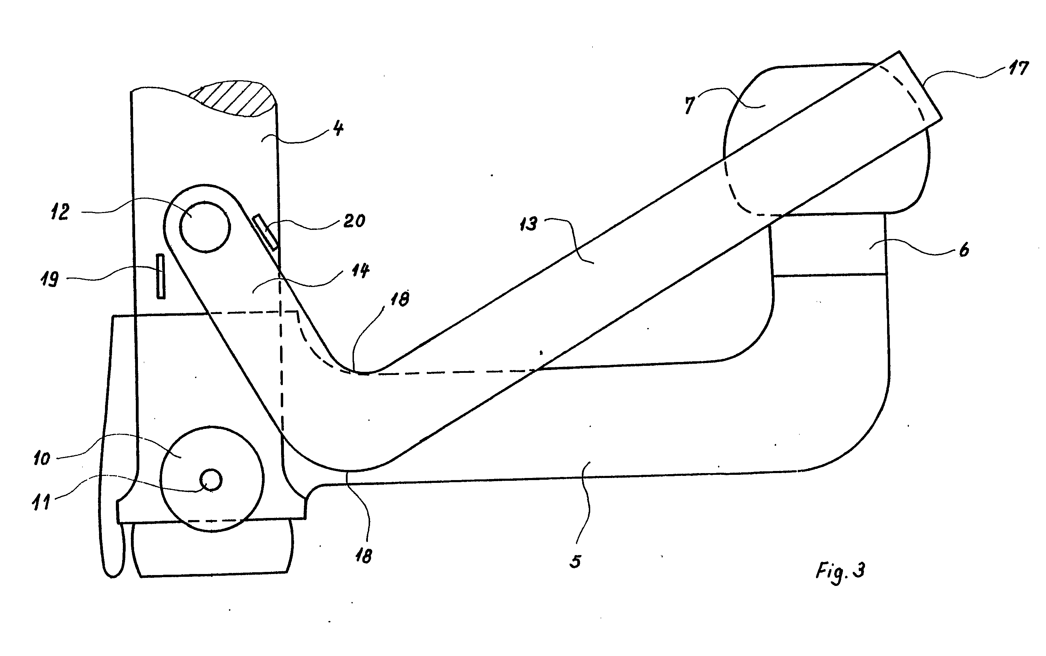

Der Schwenkbügel 13 besteht nach dem in Fig. 1 dargestellten Ausführungsbeispiel aus einem von der Schwenkachse 12 nach unten stehenden Teil 14, und zwar auf beiden Seiten des Befestigungshalses 4 sowie einem rechtwinklig davon mit zwei Schenkeln 15 und 16 beiderseits parallel zu dem Haltearm 5 verlaufenden Teil. Die beiden Schenkel 15 und 16 sind außerhalb des Kugelhalses 6 mit einer gebogenen Basis 17 verbunden. Die Anordnung, die Biegung und die Abmessungen sind so getroffen, daß beim Hochschwenken des Schwenkbügels 13 aus der in Fig. 1 und 2 dargestellten Stellung in die Stellung entsprechend der Fig. 3, die abgerundete Basis 17, die Kupplungskugel 7 eng umrundet und die Enden der beiden Schenkel 15 und 16 mit geringem Abstand beiderseits der Kupplungskugel liegen. An der Abwinklung zwischen dem senkrechten Teil 14 und dem Schenkel 15 ist der Schwenkbügel 13 mit einer Ausbiegung oder Auswölbung 18 versehen. Diese Ausbiegung oder Auswölbung 18 verläuft dicht über dem eingesetzten Sperrbolzenkopf 10 derart, daß sie ihn bei abgeschwenkter Stellung des Schwenkbügels 13 dicht übergreift und gegen Herausnehmen oder herausfallen sichert. Die Anordnung des Schwenkbügels 13 kann weiterhin derart getroffen sein, daß in abgeschwenkter (Sicherungs-)stellung, wie sie in Fig. 1 und 2 dargestellt ist, die beiden Schenkel 15 und 16 des Schwenkbügels nach unten über die unterste waagerechte Ebene des Haltearms 5 herunterragen und den Schwenkhebel 8 des Sperrelementes überragen, so daß dieser aus seiner Sperrstellung, etwa parallel zum Haltearm 5, nicht mehr verschwenkbar ist. Andererseits ist der Schwenkbügel 13 in seine in den Figuren 1 und 2 dargestellte Sicherungslage nicht einzuschwenken, solange der Schwenkhebel 8 nicht aus einer gedrehten Stellung in die in den Figuren 1 und 2 dargestellte parallele Stellung unterhalb des Haltearms 5 verschwenkt ist.

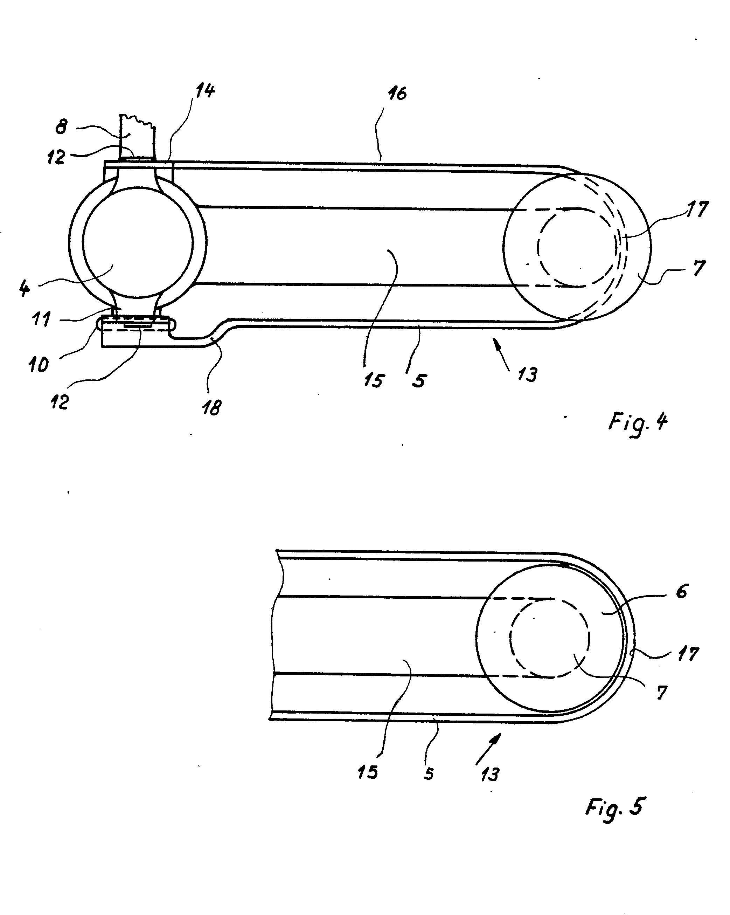

Aus der Figur 3, auch in Zusammenhang mit Fig. 5 in der Draufsicht, ist zu erkennen, daß bei hochgestellter (entsicherter) Stellung des Schwenkbügels 13 die Enden seiner Schenkel sowie die Rundung 17 die Kupplungskugel 7 eng umgeben, so daß es unmöglich ist einen Fahrzeuganhänger an die Kupplungskugel anzuhängen, solange nicht die Halte- und Sperrelemente, die die abnehmbare Kugelkopfkupplung in der Aufnahmehülse festhalten, gegen Herausfallen oder Lösung gesichert sind. Zur Begrenzung der Bewegung des Schwenkbügels 13 zwischen der Sicherungsstellung und der hochgeschwenkten Entsicherungsstellung sind am Befestigungshals 4 Anschläge 19 für die gesicherte Stellung und 20 für die entsicherte Stellung angeordnet.

## Patentansprüche

1. Anhängevorrichtung für Fahrzeuge, insbesondere verdeckt an Kraftfahrzeugen anzubringende, abnehmbare Kugelkopfkupplung mit einer Aufnahmehülse (1), die etwa senkrecht hinter der Stoßstange (2) oder dergleichen angeordnet ist, mit einem nach oben abgewinkelten Befestigungshals (4), der in die Aufnahmehülse einschiebbar und dort mit Sperrelementen (8, 10) festlegbar ist, die in etwa radiale und axiale Bohrungen eingreifen, gekennzeichnet durch einen U-förmigen Schwenkbügel (13), dessen Schenkel (15, 16) sich parallel zum Haltearm (5) erstrecken und der am Befestigungshals (4) zwischen einer Stellung verschwenkbar gelagert ist, in der die gebogene Basis (17) zwischen den beiden Schenkeln die Kupplungskugel (7) teilsweise abdeckt und die Schenkel die Sperrelemente (10 und 8) freigeben und einer Stellung, in der die gebogene Basis (17) die Kupplungskugel (7) freigibt und die Schenkel (15 und 16) die Sperrelemente (10 und 8) abdecken.

2. Anhängevorrichtung nach Anspruch 1, dadurch gekennzeichnet, daß der Schwenkbügel (13) mit einer winkligen Abbiegung (14) ausgebildet, etwa parallel zum Haltearm (5) und der dazwischenliegenden Abwinklung (9) verläuft.

3. Anhängevorrichtung nach Anspruch 1, dadurch gekennzeichnet, daß bei Anordnung eines Steck- oder Drehbolzens (10, 11) als Halte- und/oder Sperrelement, etwa im Bereich der Abwinklung (9) zwischen Haltearm (5) und Befestigungshals (4), der Schwenkbügel (13) in diesem Bereich mit einer, den Steck- oder Drehbolzen (10, 11) im Abstand überdeckenden Auswinklung oder -biegung (18) versehen ist.

4. Anhängevorrichtung nach Anspruch 1, dadurch gekennzeichnet, daß der zum Schwenkpunkt (12) abgewinkelte Schenkel (14) des U-förmigen Schwenkbügels (13) so lang ausgebildet ist, daß der Schwenkbügel in abgeschwenkter Stellung parallel zu dem Haltearm (5) diesen nach unten überragt und damit auch einen Schwenkhebel (8) gegen Verschwenken sichert, der zum Festlegen des Befestigungshalses (4) der Kupplung in der Hülse (1) aus einer 90°-Stellung in eine Stellung unmittelbar unterhalb des Haltearms (5) und parallel dazu verschwenkbar ist.

5. Anhängevorrichtung nach Anspruch 1 und einem der vorstehenden Ansprüche, dadurch gekennzeichnet, daß an dem Befestigungshals unmittelbar unterhalb der Hülse (1), die Bewegung des Schwenkbügels (13) begrenzende Anschläge (19 und 20) angeordnet sind.

## Claims

1. A hitch for vehicles, particularly a ball-head hitch to be mounted hidden on vehicles and being removable, having a location sleeve (1) being arranged approximately vertically behind the bumper (2) or the like, having a fastening neck (4) being bent upwards, said neck being movable into the location sleeve (4) and being fixable there by locking elements (8, 10) engaging into radial and axial bores, characterized by a U-shaped movable clamp (13) the sides (15, 16) of which extend in parallel to the holding arm (5) and the clamp (13) being pivotable at the fastening neck (4) between a position, where the rounded base (17) between the two sides covers partially the hitch ball (7) and where the sides release the locking elements (10 and 8), and a position, where the rounded base (17) releases the hitch ball (7) and where the sides (15 and 16) cover the locking elements (10 and 8).

2. A hitch according to claim 1, characterized by that the movable clamp (13) having a bent angle (14) extends approximately in parallel to the holding arm (5) and the angle (9).

3. A hitch according to claim 1, characterized by that, if a cotter pin or pivot pin (10, 11) is used as holding and/or locking element, the movable clamp (13) is provided about in the area of the angle (9) between holding arm (5) and fastening neck (4) with a deflection (18) covering the cotter pin or pivot pin (10, 11).

4. A hitch according to claim 1, characterized by that the side (14) being bent towards the hinge point (12) of the U-shaped movable clamp (13) is provided with a length such that, in the swivel position, the movable clamp in parallel to the holding arm (5) overhang this arm towards bottom and secure, thus, also a rocking lever (8) from being swivelled, this lever being swingable from a 90° position into a position directly below the holding arm (5) and in parallel to it in order to lock the fastening neck (4) of the hitch in the sleeve (1).

5. A hitch according to claim 1 and one of the preceding claims, characterized by that on the fastening neck directly below the sleeve (1) stops (19 and 20) are arranged, said stops limiting the movement of the movable clamp (13).

## Revendications

1. Attelage pour véhicules, en particulier attelage à boule amovible à monter dissimulé sur des véhicules à moteur, comportant une douille de montage (1), qui est disposée à peu près verticalement derrière le pare-chocs (2) ou un élément analogue, et un col de fixation (4) coudé vers le haut qui peut être inséré dans la douille de montage et y être fixé à l'aide d'éléments de blocage (8, 10) qui s'engagent dans des forures à peu près radiales et axiales, caractérisé par un étrier pivotant en U (13) dont les ailes (15, 16) s'étendent parallèlement au bras de support (5) et qui est monté sur le col de fixation (4) de manière à pouvoir pivoter entre une position dans laquelle la base ou l'âme cintrée (17) entre les deux ailes masque partiellement la boule d'attelage (7) et les ailes libèrent les éléments de blocage (10 et 8) et une position dans laquelle l'âme cintrée (17) libère la boule d'attelage (7) et les ailes (15 et 16) masquent les éléments de blocage (10 et 8).

2. Attelage suivant la revendication 1, caractérisé en ce que l'étrier pivotant (13) présente un coude angulaire (14) et s'étend à peu près parallèlement au bras de support (5) et au coude (9) intermédiaire.

3. Attelage suivant la revendication 1, caractérisé en ce que dans le cas du montage d'un axe à insérer ou d'un pivot (10, 11) en tant qu'élément de retenue et/ou de blocage, environ dans la zone du coude (9) entre le bras de support (5) et le col de fixation (4), l'étrier pivotant (13) est pourvu dans cette zone d'un coude (18) chevauchant l'axe à insérer ou le pivot (10, 11) à une certaine distance de celui-ci.

4. Attelage suivant la revendication 1, caractérisé en ce que l'aile (14) de l'étrier pivotant en U (13) coudé en direction du point de pivotement (12) a une longueur telle que l'étrier pivotant, dans sa position abaissée, parallèle au bras de support (5), dépasse ce bras vers le bas et empêche ainsi également le pivotement d'un levier pivotant (8), ce levier pouvant pivoter, pour fixer le col de fixation (4) de l'attelage dans la douille (1), à partir d'une position située à 90° vers une position située directement en dessous du bras de support (5) et parallèle à celui-ci.

5. Attelage suivant la revendication 1 et l'une quelconque des revendications précédentes, caractérisé en ce que des butées (19 et 20) limitant le déplacement de l'étrier pivotant (13) sont prévues sur le col de fixation directement en dessous de la douille (1).

Fig. 1

0 093 795

Fig. 2

0 093 795

Fig. 3

0 093 795

Fig. 4

Fig. 5

Fig. 6